# EUROPEAN PATENT SPECIFICATION

(11) **EP 1 876 373 B1**
(45) Date of publication and mention of the grant of the patent: **22.10.2008**
(21) Application number: 06014110.8
(22) Date of filing: 07.07.2006
(51) Int. Cl.: F16F 9/36, F16J 15/32

(54) **Sealing device for a shock absorber**
Dichtung für Stossdämpfer
Joint d'étanchéité pour amortisseur

(43) Date of publication of application: 09.01.2008
(60) Divisional application: 08007984.1
(73) Proprietor: Carl Freudenberg KG, 69469 Weinheim (DE)
(72) Inventor: Watling, Simon Peter, Blyth Northumberland NE24 2PR (GB)

(56) References cited:
- US-A- 4 508 020
- US-B1- 6 325 187
- US-B1- 6 443 436

## Description

### Technical Field

The invention relates to a sealing device for sealing an annular space of a shock absorber against the interior space of a pneumatic spring, comprising a seal with a sealing lip which seals the annular space between a pneumatic spring piston and a shock absorber pipe, and a pneumatic spring arrangement

### State Of The Art

Such sealing devices are disclosed in DE-A-34 05 780. The object of the sealing device is to prevent the penetration of contaminants into the shock absorber system, which comprises the shock absorber pipe and the pneumatic spring piston. Furthermore, the hydraulic fluid present in the annular space between the pneumatic spring piston and the shock absorber pipe is to be retained. In most cases the seals are designed for a full life cycle. A shock absorber may be combined with a pneumatic spring, the pneumatic spring being arranged on the front side of the shock absorber pipe from which the pneumatic spring piston emerges from the shock absorber pipe. This enables the seal to separate the annular shock absorber space filled with a hydraulic fluid from the inside of the pneumatic spring. At present the seals are designed so that the sealing lip of the seal extends in the direction of the annular shock absorber space, and a dust lip extends in the direction of the inside of the pneumatic spring. Since the inner pressures of the pneumatic springs are constantly increasing, the sealing behavior of such seals deteriorates.

The US-B- 6,325,187 discloses a sealing device for sealing annular space of a shock absorber against a pneumatic spring interior of a pneumatic spring, comprising a seal with several sealing lips which seal the annular space between a pneumatic spring piston and a shock absorber pipe, whereby one sealing lip is pre-bent in the direction of the interior of the pneumatic spring and at least one dust lip which is pre-bent in the direction of the shock absorber.

### Representation Of The Invention

The object of the invention is to provide a sealing device which can be used in a pneumatic spring-shock absorber combination and which is inured to pressure surge.

This object is achieved with the characteristics of Claim 1 and 9. The subclaims relate to advantageous designs.

To achieve the object of the invention the sealing lip is designed so that it opens in the direction of the pneumatic spring interior when the pressure in the annular space of the shock absorber is 0,2 MPa (2 bars) greater than the pressure in the inside of the pneumatic spring. As a result the pressure prevailing inside the pneumatic spring acts on the sealing lip. Since the pressure in the pneumatic spring is greater than the pressure in the shock absorber, the contact pressure on the pneumatic spring piston is reinforced and the sealing action is improved.

Because of the mounted pneumatic spring no contamination is able to reach the sealing point either, which means that a separate dust lip may be dispensed with. This provides an extremely simple, low cost construction of the seal. In this case an annular spring can be arranged on the sealing lip on the side of the outer circumference. The opening of the sealing lip prevents destruction of the seal or other element of the shock absorber. The release pressure of 2 bars is selected here so that the sealing lip is not raised under normal operating conditions. The sealing lip is designed according to the material of the sealing lip and media to be sealed by suitable selection of the wall thickness of the sealing lip and by adapting the annular spring.

The sealing lip may have several sealing edges. Here the sealing lip has in most cases two sealing edges, each of which are in sealing contact on the pneumatic spring piston under initial elastic tension. Sealing edges have a high surface pressure with low frictional resistance, so that when the friction is low a high sealing action can be achieved. The sealing action is further improved if at least two sealing edges are provided. In this case, when there is high pressure in the annular shock absorber space, one of the two sealing edges may be raised from the pneumatic spring piston and the other remains in sealing contact. This provides a leak-free seal even at high pressures.

The flanks associated with the sealing edges may be designed so that the flanks pointing in the direction of the shock absorber have a greater pitch than the flanks pointing in the direction of the pneumatic spring. The flanks, which rise steeply in the direction of the shock absorber, provides a god stripping action, so that the hydraulic fluid is retained in the annular space and the sealing lip does not float on a fluid film. The compressing pneumatic spring piston is dry, unlike the rebounding pneumatic spring piston. Because the flank is of a flat design in the direction of the pneumatic spring, low friction sliding behavior results when the pneumatic spring piston is compressed, and the flat geometry prevents the sealing lip from tending to deform, and reduces a stick-slip tendency. The flanks pointing in the direction of the shock absorber has an angle of 105° to 120° to the pneumatic spring piston, and those pointing in the direction of the pneumatic spring have an angle of 10° to 20° to the pneumatic spring piston.

The sealing lip may consist of Elastomer or PTFE. Elastomeric materials such as NBR are commonly used. PTFE is a material that is resistant to a plurality of hydraulic fluids and has a low friction value.

The seal may have a valve lip acting as a non-return valve which seals the annular space against a further annular space of a shock absorber. The seal has a support ring which consists of plastic or a metal punched part. The valve lip is arranged on this support ring and points in the direction of the shock absorber. Shock absorbers are often designed as two-pipe shock absorbers, where two pipes are pushed into each other and the pneumatic spring piston is movably arranged in the inner pipe. This gives rise to two annular spaces, the inner annular space of which is completely filled with hydraulic fluid and the outer annular space is filled partially with hydraulic fluid and partially with a gas under initial tension. Both annular spaces are connected together to guide the flow to enable hydraulic fluid to flow back and fore between the annular spaces. The valve lip seals both these annular spaces against each other.

The valve lip can be designed so that medium to be sealed only can flow from the annular space into the further annular space of the shock absorber. The valve lip is therefore designed as a check valve. The pressure in the inner annular space may rise considerably due to sudden movements of the pneumatic spring piston. To avoid damage, hydraulic fluid can then be fed into the outer annular space by raising when the valve lip is raised due to the high pressure. Here the valve lip is designed by pre-bending the valve lip in the direction of the inner annular space so that the gas under pressure cannot be fed into the inner annular space. This would result in the development of noise.

The seal may have a support ring in which a peripheral sealing bead is arranged on the side facing the pneumatic spring. The sealing bead is therefore arranged on the same side of the support ring on which the sealing lip is also arranged. Because of its small area, the sealing bead improves the sealing action and equalises irregularities of adjacent components.

The object of the invention is therefore also achieved by a pneumatic spring arrangement comprising a shock absorber which is filled at least partially with a hydraulic fluid, wherein the shock absorber incorporates at least one shock absorber pipe in which a pneumatic spring piston is arranged axially movably, and a pneumatic spring which is arranged on the front of the shock absorber on which the pneumatic spring piston is guided out of the shock absorber ppe, wherein sealing device according to the invention is arranged on the front side.

### Brief Description Of The Drawings

Some embodiments of the sealing device according to the invention are explained in greater detail in the following with reference to the figures, which show diagrammatically the following:
- Fig. 1: shows a pneumatic spring-damper arrangement according to the invention;
- Fig. 2: shows a first design of a seal according to the invention;
- Fig. 3: shows a second design of a seal according to the invention;
- Fig. 4: shows a third design of a seal according to the invention;
- Fig. 5: shows a fourth design of a seal according to the invention;
- Fig. 6: shows the sealing device assembled in a turbo charger.

### Construction Of The Invention

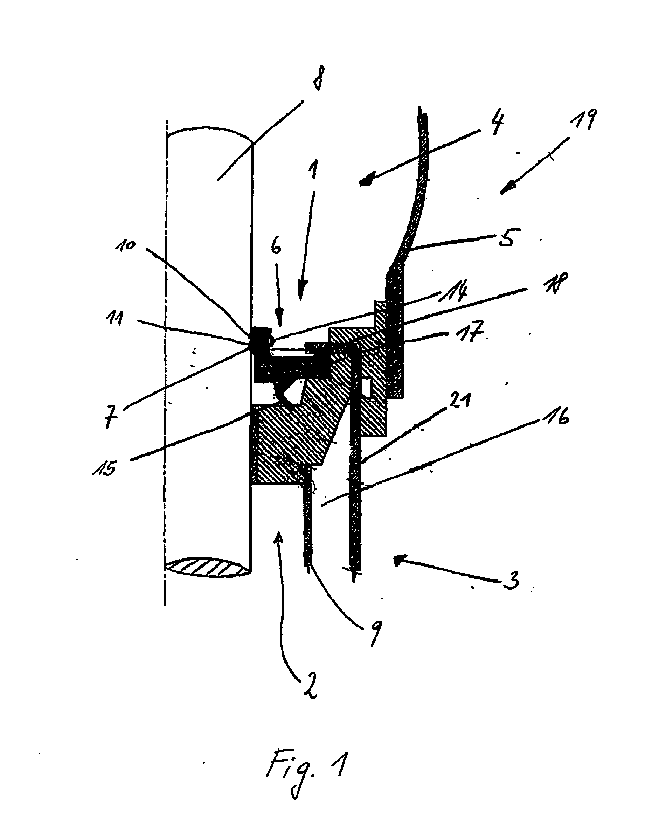

Figure 1 shows a pneumatic spring-damper arrangement 19 for the suspension of a motor vehicle. Pneumatic spring-damper arrangement 19 incorporates a shock absorber 3, which consists of two shock absorber pipes 9, 21 pushed into each other. A pneumatic spring piston 8 is arranged axially movably in inner shock absorber pipe 9, forming an annular space 2. A further annular space 16 is formed between shock absorber ppes 9, 21. The annular space 2 is completely filled with hydraulic fluid, and the further annular space 16 is filled partially with hydraulic fluid and partially with a gas under pressure. The pneumatic spring piston 8 is guided out of shock absorber pipe 9 on a front side on which pneumatic spring 5 is also arranged. On this front side there is a sealing device 1 which seals the medium in annular spaces 2, 16 of the shock absorber 3 against the inside 4 of pneumatic spring 5. Sealing device 1 consists of a seal 6, with a sealing lip 7 which is pre-bent in the direction of the inside 4 of the pneumatic spring. The sealing lip 7 consists of Elastomer and has several, in this design two, sealing edges 10, 11. An annular spring 14 is arranged on side 4 of the inside of the pneumatic spring on the outer circumference. Here the sealing lip 7 is constructed by designing annular spring 14 and the wall thickness of sealing 7 so that it opens in the direction of the inside 4 of the pneumatic spring when the pressure in annular space 2 of shock absorber 3 is at least 0,5 MPa (five bars) greater than the pressure in the inside 4 of the pneumatic spring. Seal 6 has a valve lip 15 which seals annular space 2 against further annular space 16 of shock absorber 3. Here valve lip 15 is designed so that the medium to be sealed is able to flow from annular space 2 into further annular space 16 of shock absorber 3. In the opposite direction valve lip 15 locks and therefore acts as a check valve, Sealing lip 7 and valve lip 15 are secured to a support ring 17. Furthermore, a peripheral static seal 18 is arranged on the side facing pneumatic spring 5. Static seal 18, sealing lip 7 and valve lip 15 are of uniform material and are constructed in one piece.

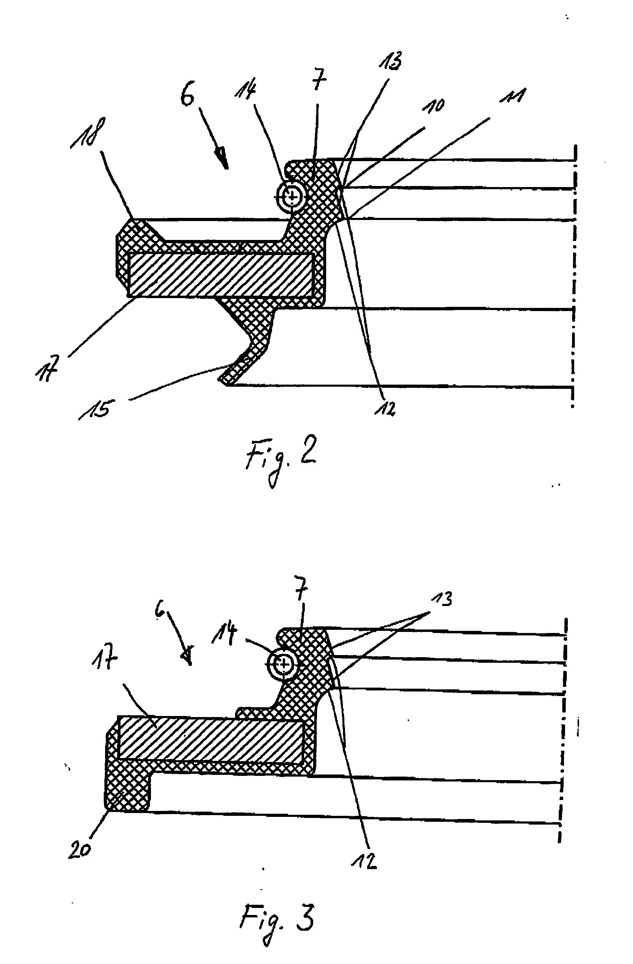

Figure 2 shows a seal 6 for a sealing device 1 according to Figure 1. The sealing lip 7 has two sealing edges 10, 11, wherein flanks 12, 13 associated with sealing edges 10, 11 are designed so that flanks 12 pointing in the direction of shock absorber 3 have a greater pitch than flanks 13 pointing in the direction of pneumatic spring 5. In this design flanks 12, pointing in the direction of shock absorber 3, are at an angle of 110° to pneumatic spring piston 8, and the flanks pointing in the direction of pneumatic spring 5 are at an angle of 15° to the pneumatic spring piston 8.

Figure 3 shows a seal 6 according to Figure 2, but no valve lip 15 is provided in this design. The seal 6 has a peripheral further static seal 20 on the side of support ring 17 opposing sealing lip 7, which static seal 20 is constructed integrally with seal lip 7 and is of the same material.

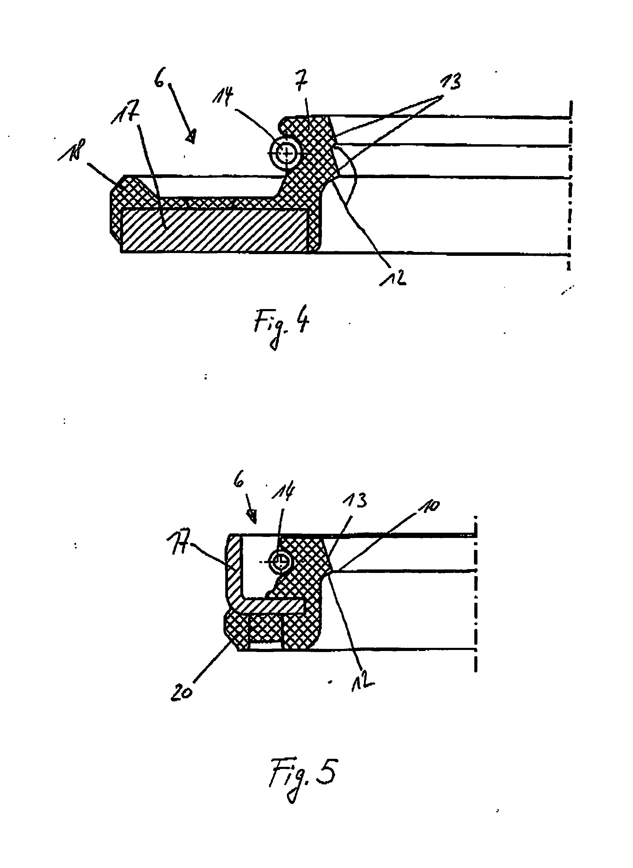

Figure 4 shows a seal 6 according to Figure 3, but this design has the static seal pointing to air side.

Figure 5 shows a seal 6 for a sealing device 1 according to Figure 1. Sealing lip 7 has a sealing edge 10, flanks 12, 13 associated with sealing edge 10 being designed so that flanks 12 pointing in the direction of shock absorber 3 have a greater pitch than flank 13 pointing in the direction of pneumatic spring 5. In this design flank 12, pointing in the direction of the shock absorber, is at an angle of 110° to pneumatic spring piston 8, and the flank pointing in the direction of pneumatic spring 5 is an angle of 15° to pneumatic spring piston 8. Support ring 17 is designed as a metal punched part and has two flanges perpendicular to each other. Sealing lip 7 moulded onto support ring 17 and a further static seal 20 is moulded integrally onto support ring 17 with sealing lip 7 and is of the same material as the ring.

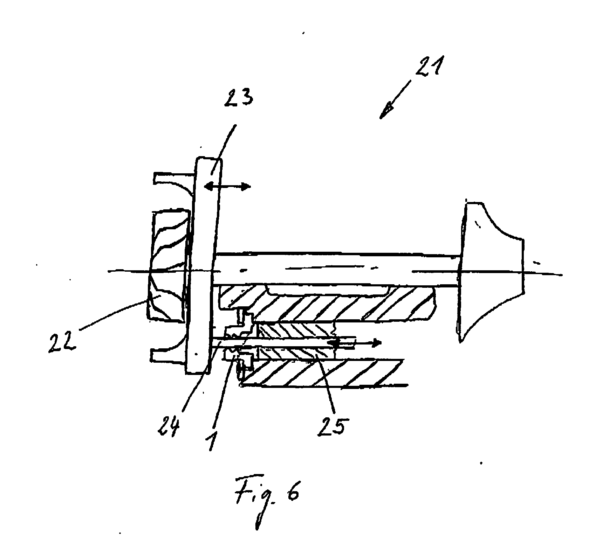

The inventive sealing device 1 can be applied to seal predominantly translative moved components in turbo chargers 21, in particular exhaust gas turbo chargers as shown in figure 6. Turbo chargers 21 with a variable geometry are state of the art. The inventive sealing device 1 can be used in turbo chargers 21 with moving sidewall geometry. In those embodiments the turbo charger 21 wheel 22 is surrounded by a ring of fixed angle nozzle guide vanes on a translative movable carrier 23. The flow area is varied by changing the width of the flow passage. The sliding nozzle ring 23 is accessed by translative movable rods 24. The rods 24 are supported in a guiding 25 and the sealing device 1 separates the lubricant in the guiding 25 from the exhaust gas passing the wheel 22.

## Claims

1. A sealing device (1) for sealing annular space (2) of a shock absorber (3) against a pneumatic spring interior 4 of a pneumatic spring (5), comprising a seal (6) with a sealing lip (7) which is intented to seal the annular space (2) between a pneumatic spring piston (8) and a shock absorber pipe (9), whereby the sealing lip (7) is pre-bent in the direction of the interior (4) of the pneumatic spring, **characterised in that** the sealing lip (7) is designed so that it opens in the direction of the interior (4) of the pneumatic spring when the pressure in the annular space (2) of the shock absorber (3) is at least 0,2 MPa (2 bars) greater than the pressure in the interior (4) of the pneumatic spring.

2. The sealing device according to Claim 1, **characterised in that** the sealing lip (7) has several sealing edges (10, 11).

3. The sealing device according to Claim 1 or 2, **characterised in that** the flanks (12, 13) associated with the sealing edges (10, 11) are designed so that the flanks (12) pointing in the direction of the shock absorber (3) have a greater pitch than the flanks (13) pointing in the direction of the pneumatic spring(5).

4. The sealing device according to Claims 1 to 3, **characterised in that** the sealing lip (7) consists of Elastomer or PTFE.

5. The sealing device according to one of Claims 1 to 4, **characterised in that** an annular spring (14) is arranged on the sealing lip (7) on the side of the outer circumference.

6. The sealing device according to one of Claims 1 to 5, **characterised in that** the seal (6) has a valve lip (15) which is intended to seal the annular space (2) against a further annular space (16) of the shock absorber (3).

7. The sealing device according to Claim 6, **characterised in that** the valve lip (15) is designed so that medium to be sealed is only able to flow from the annular space (2) into the further annular space (16) of the shock absorber (3).

8. The sealing device according to one of Claims 1 to 7, **characterised in that** the seal (6) has a support ring (17) on the peripheral side of which a static seal (18, 20) is arranged.

9. A pneumatic spring arrangement (19) comprising a shock absorber (3) which is filled at least partially with a hydraulic fluid, wherein the shock absorber (3) comprises at least one shock absorber pipe (9) in which a pneumatic spring piston (8) is arranged so that it is axially movable, and a pneumatic spring (5) which is arranged on the front side of the shock absorber (3) on which the pneumatic spring piston (8) is guided out of the shock absorber (3), wherein a sealing arrangement (1) according to one of the preceding claims is arranged on the front side.

## Patentansprüche

1. Dichtungsanordnung (1) zur Abdichtung eines Ringraums (2) eines Stoßdämpfers (3) gegenüber einem Luftfederinnenraum (4) einer Luftfeder (5), umfassend eine Dichtung (6) mit einer Dichtlippe (7), die den Ringraum (2) zwischen einem Luftfederkolben (8) und einem Stoßdämpferrohr (9) abdichtet, wobei die Dichtlippe (7) in Richtung des Luftfederinnenraums (4) vorgewölbt ist, **dadurch gekennzeichnet, dass** die Dichtlippe (7) derart ausgebildet ist, dass sie sich in Richtung des Luftfederinnenraums (4) öffnet, wenn der Druck in dem Ringraum (2) des Stoßdämpfers (3) mindestens 0,2 MPa größer ist als der Druck in dem Luftfederinnenraum (4).

2. Dichtungsanordnung nach Anspruch 1, **dadurch gekennzeichnet, dass** die Dichtlippe (7) mehrere Dichtkanten (10, 11) aufweist.

3. Dichtungsanordnung nach Anspruch 1 oder 2, **dadurch gekennzeichnet, dass** die den Dichtkanten (10,11) zugeordneten Flanken (12, 13) derart ausgebildet sind, dass die in Richtung des Stoßdämpfers (3) weisenden Flanken (12) eine größere Steigung aufweisen als die in Richtung der Luftfeder (5) weisenden Flanken (13).

4. Dichtungsanordnung nach einem der Ansprüche 1 bis 3, **dadurch gekennzeichnet, dass** die Dichtlippe (7) aus Elastomer oder PTFE besteht.

5. Dichtungsanordnung nach einem der Ansprüche 1 bis 4, **dadurch gekennzeichnet, dass** außenumfangsseitig an der Dichtlippe (7) eine Ringfeder (14) angeordnet ist.

6. Dichtungsanordnung nach einem der Ansprüche 1 bis 5, **dadurch gekennzeichnet, dass** die Dichtung (6) eine statische Dichtlippe (15) aufweist, die den Ringraum (2) gegenüber einem weiteren Ringraum (16) des Stoßdämpfers (3) abdichtet.

7. Dichtungsanordnung nach Anspruch 6, **dadurch gekennzeichnet, dass** die statische Dichtlippe (15) derart ausgebildet ist, dass abzudichtendes Medium nur vom Ringraum (2) in den weiteren Ringraum (16) des Stoßdämpfers (3) strömen kann.

8. Dichtungsanordnung nach einem der Ansprüche 1 bis 7, **dadurch gekennzeichnet, dass** die Dichtung (6) einen Tragring (17) aufweist, an dem außenumfangsseitig eine statische Dichtlippe (18, 20) angeordnet ist.

9. Luftfederanordnung (19), umfassend einen Stoßdämpfer (3) der zumindest teilweise mit einer hydraulischen Flüssigkeit befüllt ist, wobei der Stoßdämpfer (3) zumindest ein Stoßdämpferrohr (9) umfasst in dem ein Luftfederkolben (8) axial beweglich angeordnet ist sowie eine Luftfeder (5), die an der Stirnseite des Stoßdämpfers (3) angeordnet ist, an der der Luftfederkolben (8) aus dem Stoßdämpfers (3) herausgeführt ist, wobei an der Stirnseite eine Dichtungsanordnung (1) nach einem der vorherigen Ansprüche angeordnet ist.

## Revendications

1. Dispositif (1) d'étanchéité destiné à isoler un espace annulaire (2) d'un amortisseur (3) par rapport à un intérieur (4) de ressort pneumatique d'un ressort pneumatique (5),
comportant un joint (6) doté d'une lèvre (7) d'étanchéité destinée à sceller l'espace annulaire (2) entre un piston (8) de ressort pneumatique et un tube (9) d'amortisseur, la lèvre (7) d'étanchéité étant ainsi pré-coudée en direction de l'intérieur (4) du ressort pneumatique, **caractérisé en ce que** la lèvre (7) d'étanchéité est conçue de façon à s'ouvrir en direction de l'intérieur (4) du ressort pneumatique lorsque la pression dans l'espace annulaire (2) de l'amortisseur (3) est supérieure d'au moins 0,2 MPa (2 bar) à la pression à l'intérieur (4) du ressort pneumatique.

2. Dispositif d'étanchéité selon la revendication 1, **caractérisé en ce que** la lèvre (7) d'étanchéité comprend plusieurs arêtes (10, 11) d'étanchéité.

3. Dispositif d'étanchéité selon la revendication 1 ou 2, **caractérisé en ce que** les flancs (12, 13) associés aux arêtes (10, 11) d'étanchéité sont conçus de telle sorte que les flancs (12) orientés en direction de l'amortisseur (3) présentent une pente supérieure à celle des flancs (13) orientés en direction du ressort pneumatique (5).

4. Dispositif d'étanchéité selon les revendications 1 à 3, **caractérisé en ce que** la lèvre (7) d'étanchéité est constituée d'élastomère ou de PTFE.

5. Dispositif d'étanchéité selon l'une des revendications 1 à 4, **caractérisé en ce qu'**un ressort annulaire (14) est disposé sur la lèvre (7) d'étanchéité du côté de la circonférence extérieure.

6. Dispositif d'étanchéité selon l'une des revendications 1 à 5, **caractérisé en ce que** le joint (6) est doté d'une lèvre (15) formant clapet destinée à isoler l'espace annulaire (2) par rapport à un espace annulaire supplémentaire (16) de l'amortisseur (3).

7. Dispositif d'étanchéité selon la revendication 6, **caractérisé en ce que** la lèvre (15) formant clapet est conçue de telle sorte que le milieu à isoler ne puisse s'écouler que de l'espace annulaire (2) dans l'espace annulaire supplémentaire (16) de l'amortisseur (3).

8. Dispositif d'étanchéité selon l'une des revendications 1 à 7, **caractérisé en ce que** le joint (6) est muni d'une bague (17) de soutien sur le côté périphérique de laquelle un joint statique (18, 20) est disposé.

9. Configuration (19) de ressort pneumatique comportant un amortisseur (3) rempli au moins partiellement d'un fluide hydraulique, l'amortisseur (3) comportant au moins un tube (9) d'amortisseur dans lequel un piston (8) de ressort pneumatique est disposé de façon à être mobile axialement, et un ressort pneumatique (5) disposé sur la face avant de l'amortisseur (3) sur laquelle le piston (8) de ressort pneumatique est guidé à la sortie de l'amortisseur (3), un dispositif (1) d'étanchéité selon l'une des revendications précédentes étant disposé sur la face avant.
